# EUROPEAN PATENT SPECIFICATION

(11) **EP 3 819 677 B1**
(45) Date of publication and mention of the grant of the patent: **05.04.2023**
(21) Application number: 19831143.3
(22) Date of filing: 04.07.2019
(51) Int. Cl.: G01V 8/20, G01J 1/42, H01H 35/00, G08B 13/186, F16P 3/14

(54) **DATA PROCESSING DEVICE FOR MULTIPLE OPTICAL AXIS PHOTOELECTRIC SENSOR**
DATENVERARBEITUNGSVORRICHTUNG FÜR EINEN FOTOELEKTRISCHEN SENSOR MIT MEHREREN OPTISCHEN ACHSEN
DISPOSITIF DE TRAITEMENT DE DONNÉES POUR CAPTEUR PHOTOÉLECTRIQUE À AXES OPTIQUES MULTIPLES

(30) Priority: 04.07.2018 JP 2018127744
(43) Date of publication of application: 12.05.2021
(73) Proprietor: Omron Corporation, Kyoto-shi, Kyoto 600-8530 (JP)
(72) Inventor: HASHIMOTO, Minoru, Kyoto-shi, Kyoto 600-8530 (JP); KIKUCHI, Keisaku, Kyoto-shi, Kyoto 600-8530 (JP); YAMAJI, Takamasa, Kyoto-shi, Kyoto 600-8530 (JP); YAMADA, Yuya, Kyoto-shi, Kyoto 600-8530 (JP)
(74) Representative: HGF
(86) International application number: PCT/JP2019/026692
(87) International publication number: WO 2020/009195

(56) References cited:
- JP-A- 2001 222 788
- JP-A- 2002 296 361
- JP-A- 2002 296 361
- JP-A- 2016 156 768
- JP-A- 2017 150 859
- JP-A- 2017 150 859
- N N: "Omron F3SJ-A????N?? Series (Version 2) Safety Light Curtain User's Manual", , 1 January 2014 (2014-01-01), pages 1-223, XP055596678, Retrieved from the Internet: URL:https://industrial.omron.us/es/media/F 3SJ-A-P_Manual_EN_719K_tcm922-112436.pdf [retrieved on 2019-06-14]

## Description

### TECHNICAL FIELD

The present disclosure relates to a data processing device for a multiple optical axis photoelectric sensor.

### BACKGROUND

In general, a multiple optical axis photoelectric sensor has a light projecting section in which a plurality of light projecting elements are arranged in a raw and a light receiving section in which the same number of light receiving elements as that of the light projection elements are arranged in a raw so that each of the light projecting elements and each of light receiving elements faces each other on one-to-one basic. The light projecting section is connected to the light receiving section through a communication line. When light is sequentially emitted from each of the light projecting elements in the light projecting section, a certain amount of light, which is received by each of the light receiving elements corresponding to each of the light projecting elements in the light receiving section at a timing synchronized with the light emitting operation in each of the light projecting elements, is extracted in the light projecting section. Thus, the o is detected sequentially. Furthermore, in the light receiving section, on the basis of the detecting result of the shielded state for each optical axis, it is determined whether or not there is an object in an detecting area, so that the light receiving section outputs a signal indicating the detecting result (hereinafter referred to "an object detecting signal").

This kind of sensor is usually set so that the object detecting signal is turned on when the shielded state is detected in any one of optical axes. However, depending on the place of installation of the sensor or the purpose of the use of the sensor, there are cases where various conditions have to be set for the contents of detecting operations, such as invalidating the detecting result in a certain optical axis, turning on the object detecting signal only when optical axes of a prescribed number or more are shielded, etc.

For example, the following Patent Literature 1 discloses the technology in which various conditions are set by a console connected to a sensor.

### CITATION LIST

### PATENT LITERATURE

Patent Literature 1: Japanese Unexamined Patent Application Publication No. 2002-296361

JP 2017 150859 A discloses a setting console for a multi-optical axis photoelectric sensor that detects a light shielding state for each of a plurality of optical axes and outputs the detection result.

### SUMMARY OF THE INVENTION

### TECHNICAL PROBLEM

However, in the Patent Literature 1, if it is necessary to copy the setting of the various conditions in a certain sensor needs to another sensor, a user has to connect a console connecting to the other sensor to a personal computer to perform the same setting as that of the various conditions in the certain sensor with respect to the console connected to the other sensor.

In the Patent Literature 1, since it is necessary to connect a personal computer to a console directly in order to change the setting, a user has to bring the personal computer to a production site when copying the setting of the various conditions in a certain sensor to another sensor. Therefore, the user's operation is complicated. Furthermore, in some cases, it is impossible for everyone to perform the copy of the setting since a user having use authority for the personal computer is limited. Moreover, if different settings are needed for a plurality of sensors respectively, a user has to perform the different settings. Therefore, it is complicated.

The objects of the present invention is to provide a data processing device for a multiple optical axis photoelectric sensor in which anyone can easily perform the backuping of the setting data for the multiple optical axis photoelectric sensor and the restoring of the setting data.

### SOLUTION TO PROBLEM

To solve the above-described problem, a data processing device that is capable of being connected to a multiple optical axis photoelectric sensor for detecting a shielded state for each of a plurality of optical axes to output a signal indicating presence or absence of an object on the basis of a result of detecting the shielded state is disclosed according to claim 1.

The data processing device for the multiple optical axis photoelectric sensor reads the setting data from the multiple optical axis photoelectric sensor through the communication section to store the setting data read from the multiple optical axis photoelectric sensor in the storing section, according to a state of connection with the multiple optical axis photoelectric sensor, a use history of the data processing device, the operating conditions set by the setting section, and the product information. Furthermore, the data processing device for the multiple optical axis photoelectric sensor writes the setting data stored in the storing section in the multiple optical axis photoelectric sensor through the communication section, according to a state of connection with the multiple optical axis photoelectric sensor, a use history of the data processing device, the operating conditions set by the setting section, and the product information.

According to the data processing device for the multiple optical axis photoelectric sensor, it performs the backup process or the restoring process of the setting data in multiple optical axis photoelectric sensor according to the determination of each condition just by connecting the data processing device to the multiple optical axis photoelectric sensor. Therefore, for example, if the multiple optical axis photoelectric sensor is exchanged, it is possible to implement the resetting of the multiple optical axis photoelectric sensor just by connecting the data processing device to the multiple optical axis photoelectric sensor.

In one aspect of the data processing device for the multiple optical axis photoelectric sensor, the control section performs reading or writing of the setting data if the control section determines that the data processing device is in a state of connecting to the multiple optical axis photoelectric sensor.

According to the one aspect of the data processing device for the multiple optical axis photoelectric sensor, the data processing device performs the reading or writing of the setting data if it determines that the data processing device is in a state of connecting to the multiple optical axis photoelectric sensor. Therefore, it is possible to easily perform the resetting of the multiple optical axis photoelectric sensor just by connecting to the data processing device to the multiple optical axis photoelectric sensor.

In another aspect of the data processing device for the multiple optical axis photoelectric sensor, the control section forcibly performs the reading of the setting data if the control section determines that the data processing device does not have a use history of the data processing device.

According to the other aspect of the data processing device for the multiple optical axis photoelectric sensor, the reading of the setting data is performed forcibly if the control section determines that the data processing device has no use history at a state of the factory shipment. Thus, it is possible to easily perform the buckuping process for the multiple optical axis photoelectric sensor just by connecting the data processing device to the multiple optical axis photoelectric sensor.

In other aspect of the data processing device for the multiple optical axis photoelectric sensor, the control section performs the reading of the setting data if the control section determines that thee data processing device has a use history of the data processing device, and if the reading of the setting data is set to be enabled by the setting section.

According to the other aspect of the data processing device for the multiple optical axis photoelectric sensor, the setting section can set whether or not the reading of the setting data is enabled. If the data processing device has a use history of the data processing device, it indicates that any one of the forcible reading of the setting data or the intentional reading of the setting data has been performed at least once so far. Therefore, in this case, the setting data of the multiple optical axis photoelectric sensor is stored in the storing section. However, if a user sets that the reading of the setting data is enabled using the setting section, the control section prioritizes the user's intention, so that it easily performs the backuping process just before connecting the data processing device to the multiple optical axis photoelectric sensor.

In the other aspect of data processing device for the multiple optical axis photoelectric sensor, the data processing device further includes a confirming switch. The control section performs the reading of the setting data after the control section confirms that the confirming switch is pressed by a user.

According to the other aspect of data processing device for the multiple optical axis photoelectric sensor, since the reading of the setting data is performed after the pressing of the confirming switch is confirmed, it is possible to prevent a user's undesired overwriting of the setting data in the data processing device from being implemented.

In the other aspect of data processing device for the multiple optical axis photoelectric sensor, the control section performs the writing of the setting data if the control section determines that the data processing device has a use history of the data processing device, and if the reading of the setting data is set to be disabled by the setting section, and if product information of the multiple optical axis photoelectric sensor does not coincide with that stored in the storing section.

According to the other aspect of data processing device for the multiple optical axis photoelectric sensor, the setting section can set whether or not the reading of the setting data is disabled. If the data processing device has a use history of the data processing device, the setting data is stored in the storing section. Therefore, if a user exchanges the multiple optical axis photoelectric sensor and sets that the reading of the setting data is disabled using the setting section, it easily performs the restoring process just before connecting the data processing device to the exchanged multiple optical axis photoelectric sensor.

In the other aspect of data processing device for the multiple optical axis photoelectric sensor, the data processing device further includes a confirming switch. The control section performs the writing of the setting data after the control section confirms that the confirming switch is pressed by a user.

According to the other aspect of data processing device for the multiple optical axis photoelectric sensor, since the writing of the setting data is performed after the pressing of the confirming switch is confirmed, it is possible to a user's undesired overwriting in the multiple optical axis photoelectric sensor from being implemented.

In the other aspect of data processing device for the multiple optical axis photoelectric sensor, the control section makes the multiple optical axis photoelectric sensor operate using the setting data after the writing of the setting data is performed, by restarting the multiple optical axis photoelectric sensor after performing the writing of the setting data.

According to the other aspect of data processing device for the multiple optical axis photoelectric sensor, after performing the writing of the setting data, the control section automatically restarts the multiple optical axis photoelectric sensor, and makes the multiple optical axis photoelectric sensor operate using the setting data after the writing of the setting data is performed. It is possible to enhance convenience.

In the other aspect of data processing device for the multiple optical axis photoelectric sensor, a plurality of multiple optical axis photoelectric sensors are provided. The storing section is capable of storing each product information for each of the plurality of multiple optical axis photoelectric sensors. The control section performs the reading of the setting data from each of the plurality of multiple optical axis photoelectric sensors, or performs the writing of the setting data in each of the plurality of multiple optical axis photoelectric sensors.

According to the other aspect of data processing device for the multiple optical axis photoelectric sensor, the data processing device can be connected to a plurality of multiple optical axis photoelectric sensors arranged in different places respectively. The storing section can store each product information for each of the plurality of multiple optical axis photoelectric sensors. The reading of and the writing of the setting data are performed with respect to each of the plurality of multiple optical axis photoelectric sensors. Therefore, it is possible to easily perform the backuping process and the restoring process in each of the plurality of multiple optical axis photoelectric sensors just by connecting one data processing device to the plurality of multiple optical axis photoelectric sensors.

In the other aspect of data processing device for the multiple optical axis photoelectric sensor, the multiple optical axis photoelectric sensor includes a light projecting section and a light receiving section. The storing section is capable of storing each product information for each of the light projecting section and the light receiving section. The control section performs the reading of the setting data from each of the light projecting section and the light receiving section, or performs the writing of the setting data in each of the light projecting section and the light receiving section.

According to the other aspect of data processing device for the multiple optical axis photoelectric sensor, the storing section can store each product information for each of the light projecting section and the light receiving section. The control section performs the reading and the writing of the setting data with respect to each of the light projecting section and the light receiving section. Therefore, if any of the light projecting section and the light receiving section is exchanged, it is possible to easily perform the backuping process and the restoring process of the multiple optical axis photoelectric sensor just by connecting the data processing device to the multiple optical axis photoelectric sensor.

In the other aspect of data processing device for the multiple optical axis photoelectric sensor, the data processing device is capable of being connected to a plurality of light projecting sections and a plurality of light receiving sections. The storing section is capable of storing each product information for each of the plurality of light projecting sections and each of the plurality of light receiving sections. The control section performs the reading of the setting data from each of the plurality of light projecting sections and each of the plurality of light receiving sections, or performs the writing of the setting data in each of the plurality of light projecting sections and each of the plurality of light receiving sections.

According to the other aspect of data processing device for the multiple optical axis photoelectric sensor, if a plurality of light projecting sections and a plurality of light receiving sections are connected to the data processing device, the storing section can store each product information for each of the plurality of light projecting sections and each of the plurality of light receiving sections. The reading and writing of the setting are performed with respect to each of the plurality of light projecting sections and each of the plurality of light receiving sections. Therefore, if any of the plurality of light projecting sections and the plurality of light receiving sections is exchanged, it is possible to easily perform the backuping process and the restoring process of the multiple optical axis photoelectric sensor just by connecting the data processing device to the multiple optical axis photoelectric sensor.

In the other aspect of data processing device for the multiple optical axis photoelectric sensor, the data processing device further includes a generic communication section that is capable of communicating with other devices. The control section can transmit data stored in the storing section to the other device through the generic communication section.

According to the other aspect of data processing device for the multiple optical axis photoelectric sensor, the other device can be connected to the data processing device. The data such as the setting data stored in the storing section can be transmitted to the other device through the generic communication section. Thus, it is possible to improve efficiency in trouble-shooting and information collection for a safety system.

In the other aspect of data processing device for the multiple optical axis photoelectric sensor, the data processing device is capable of being driven only by a bus power in a personal computer.

According to the other aspect of data processing device for the multiple optical axis photoelectric sensor, if the data processing device is connected to a USB terminal of a personal computer, etc., the data processing device can be driven only by a bus power in the personal computer. Thus, it is possible to enhance convenience.

### ADVANTAGEOUS EFFECTS OF INVENTION

As described above clearly, according to the data processing device for the multiple optical axis photoelectric sensor, it is possible for anyone to easily perform the backuping process and the restoring process of the multiple optical axis photoelectric sensor.

### BRIEF DESCRIPTION OF DRAWINGS

Fig. 1 is a schematic diagram for a data processing device for a multiple optical axis photoelectric sensor according to the first embodiment;
Fig. 2 is a diagram showing the appearance of the data processing device;
Fig. 3 is a diagram for explaining the function of a DIP switch;
Fig. 4 is a diagram for explaining the whole processing in the data processing device;
Fig. 5 is a flowchart for a backuping process in the data processing device; and
Fig. 6 is a flowchart for a restoring processing in the data processing device.

### DETAILED DESCRIPTION OF PREFERRED EMBODIMENT

In the following, embodiments will be described in detail with reference to the drawings as appropriate.

### (First Embodiment)

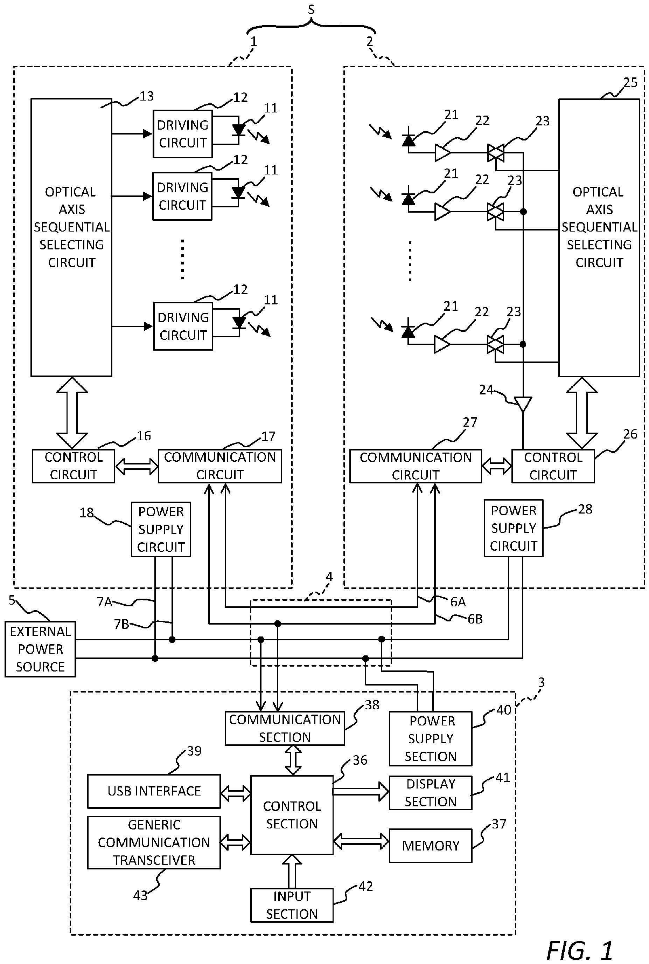

Fig. 1 is a schematic diagram for a data processing device for a multiple optical axis photoelectric sensor according to the first embodiment. As shown in Fig. 1, the multiple optical axis photoelectric sensor S has a light projecting section 1 in which a plurality of light projecting elements 11 are arranged and a light receiving section 2 in which the same number of light receiving elements 21 as that of the light projection elements 11 are arranged so that each projection surface of the light projecting elements and each light receiving surface of light receiving elements faces each other. The light projecting section 1 includes a driving circuit 12 that drives each of light projecting elements 11 individually, an optical axis sequential selecting circuit 13, a control circuit 16, a communication circuit 17, a power supply circuit 18, etc., in addition to the light projecting elements 11. The light receiving section 2 includes an amplifier 22 and an analog 23 for each of the light receiving elements 21, an optical axis sequential selecting circuit 25, a control circuit 26, an inputting amplifier 24 to the control circuit 26, a communication circuit 27, a power supply circuit 28, etc., in addition to the light receiving elements 21.

Each of the control circuits 16, 26 in the light projecting section 1 and the light receiving section 2 is comprised of a micro computer including a CPU and a memory, for example. Each of the communication circuits 17, 27 is a communication interface conforming to RS485, so that it controls the exchanging of signals between the light projecting section 1 and the light receiving section 2 through two communication lines 6A, 6B corresponding to RS485.

Each of the power supply circuits 18, 28 receives the power supply from a common external power source 5 (DC power supply), so that it supplies the power supply to each section in the device (in the light projecting section 1 and the light receiving section 2). The power supply lines are branched to two power supply lines 7A, 7B. One is connected to the power supply circuit 18 in the light projecting section 1, while another is connected to the power supply circuit 28 in the light projecting section 2. Then, the power supply from the external power source 5 to each of the power supply circuits 18, 28 is executed through the power supply lines 7A, 7B. Therefore, the light projecting section 1 is in the state of connecting to the light receiving section 2 with the communication lines 6A, 6B and the power supply lines 7A, 7B.

The control circuit 16 in the light projecting section 1 generates timing signals every prescribed time to provide them to the optical axis sequential selecting circuit 13. The optical axis sequential selecting circuit 13 is a gate circuit for connecting each drive circuit 12 of each of the light projecting elements 11 to the control circuit 16 sequentially. By the switching process in this circuit, the timing signal from the control circuit 16 is sequentially provided to each drive circuit 12, so that a sequential light emitting operation in each of the light projecting elements 11 is implemented. Furthermore, the timing signal is also provided to the control circuit 26 in the light receiving section 2 through the communication circuits 17, 27.

In the light receiving section, the output from each of the light receiving elements 21 (hereinafter referred to "light receiving output") is transmitted to an input line 29 to the control circuit 26 through the amplifier 22 and the analog switch 23. The control circuit 26 transmits the timing signal from the light projecting section 1 to the optical axis sequential selecting circuit 25 to turn on each analog switch 23 in each optical axis sequentially. Then, the control circuit 26 receives the light receiving output from the light receiving element 21 corresponding to the light projecting element which emits light, so that it compares each light receiving output with a predetermined threshold value to determine whether or not each optical axis is in a shielded stated. When the receiving of the light receiving output is finished for all optical axes, the control circuit 26 performs a final determining process by collecting the determining result for each optical axis to produce an object detecting signal. Then the control circuit 26 outputs the object detecting signal to an external through an output circuit which is not described in drawings.

In the first embodiment, by a branch connector 4, the communication lines 6A, 6B and the power supply lines 7A, 7B are branched to an external, a data processing device 3 as a data processing device of the multiple optical axis photoelectric sensor S can be connected between the light projecting section 1 and the light receiving section 2.

The data processing device 3 can set the definition of various detecting operations, such as a fixed blanking function, a floating blanking, etc., by putting the multiple optical axis photoelectric sensor S before it operates to a setting mode. Furthermore, the data processing device 3 can backup setting data in the multiple optical axis photoelectric sensor S, and can restore the setting data for a changed multiple optical axis photoelectric sensor S.

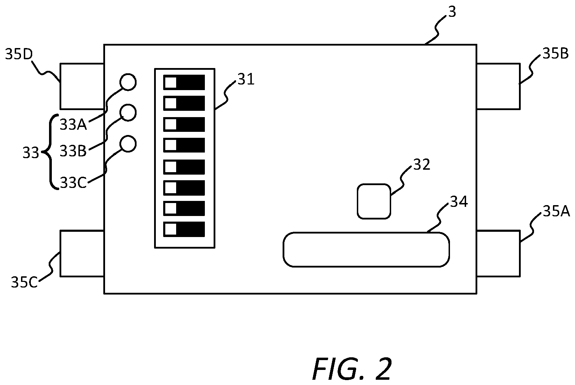

Fig. 2 is a diagram showing the appearance of the data processing device 3. In the front face of the housing of the data processing device 3, a DIP switch 31 as a setting section, a push switch 32 as a confirming switch, an LED 33, and a USB terminal 34 which can be connected to an external computer are provided. The LED 33 includes an IN-LED 33A, an OUT-LED 33B, and an ERR-LED 33C. The function of these LEDs will be described later.

In the side face of the housing, a connecting terminal 35A for connecting to the light projecting section 1, a connecting terminal 35B for connecting to the light receiving section 2, a connecting terminal 35C for connecting to IO-LINK (registered trademark), and a power supply terminal 35D are provided.

As shown in Fig. 1, inside the housing of the data processing device 3, a memory 37 as a storing section, a communication section 38, a USB interface 39, a power supply section 40, a display section 41, an input section 42, and a generic communication transceiver 43 as a generic communication section are included in addition to a control section 36 comprised of a micro computer.

The communication section 38 is an interface conforming to RS485 standard as well as the communication circuits in the light projection section 1 and the light receiving section 2. The communication section 38 is connected to the communication lines 6A, 6B branched by the branch connector 4. The power supply section 40 is connected to the power supply lines 7A, 7B branched by the branch connector 7 to supply power to each section in the data processing device 3 by receiving power from the external power supply 5.

The USB interface 39 enables to communicate between the control section 36 and an personal computer when the personal computer is connected to the USB terminal 34. The communicating function using Bluetooth (registered trademark) may be provided for the communication with the personal computer. The data processing device 3 can be driven only by the bus power in a personal computer.

The display section 41 is an interface for displaying, so that it performs the control for turning on the LED 33. Input section 42 is an input interface that accepts the input by the DIP switch 31 and the push switch 32 to transmit the contents of the input to the control section 36.

The generic communication transceiver 43 has the function of converting a communication protocol to disclose the information of the multiple optical axis photoelectric sensor S to a generic system by IO-LINK. Thus, it is possible to improve efficiency in trouble-shooting and information collection for a safety system.

The control section 36 is comprised of a CPU. The memory 37 is comprised of a flash ROM, for example, in which a program and setting data described later, etc., are stored. The control section 36 reads in the input of the DIP switch 31 and the push switch 32 through the input section 42 to set the definition of various detecting operations to the sensor S by the communication between the light projecting section 1 and the light receiving section 2. The control section 36 backups the current setting data in the sensor S, and restores the setting data to a changed new sensor S.

According to the above-mentioned configuration, by incorporating interfaces conforming to RS485 standard in the communication circuits 17, 27 in the light projection section 1 and the light receiving section 2, and the communication section 38 in the data processing device 3, a bidirectional communication is performed individually between various sections. Therefore, in the data processing device 3, it is possible to perform the setting process individually with respect to any of the light projection section 1 and the light receiving section 2. Although most of definitions relating to an object detecting are set in the control circuit 26 in the light receiving section 2, the definition of a process, in which an actual result of the detecting process needs to be registered, such as a fix blanking, is set in the light receiving section 2. In this case, by transmitting a command to the light projecting section 1 to let the light receiving section 2 perform a projection operation, the result of the detecting process is incorporated in the light receiving section 2, so that the result is set to the light receiving section 2 after performing an invalidation process for optical axes, etc.

The data processing device 3 is configured to be able to rewrite a program of the control section 36 and the setting data in the sensor S appropriately so that it can be used continuously even when a program for setting is modified, or a new type of sensor is released.

To perform this rewriting process, first, the data processing device 3 is connected to a personal computer (undescribed in drawings) including electric data for updating, etc., through the USB interface 39. Then, the setting data is rewritten in the data processing device 3 by the personal computer. Next, by connecting the data processing device 3 to the sensor S, the setting data to the sensor S is updated under the determination of the data processing device 3.

The same setting data for a certain sensor S1 may be used for another sensor S2. In this case, by connecting the certain sensor S1 to the data processing device 3, the setting data for the certain sensor S1 is backuped in the data processing device 3 under the determination of the data processing device 3. After that, by connecting the data processing device 3 to the other sensor S2, the setting data is restored in the other sensor S2 under the determination of the data processing device 3.

As for an easy process, such as a change of type of reset, the data processing device 3 can perform the process alone by connecting the data processing device 3 to the sensor S. As for a complicated setting, if the setting data is written in the data processing device 3 by a personal computer once, the setting data can be written in the sensor S under the determination of the data processing device 3 by connecting the data processing device 3 to the sensor S.

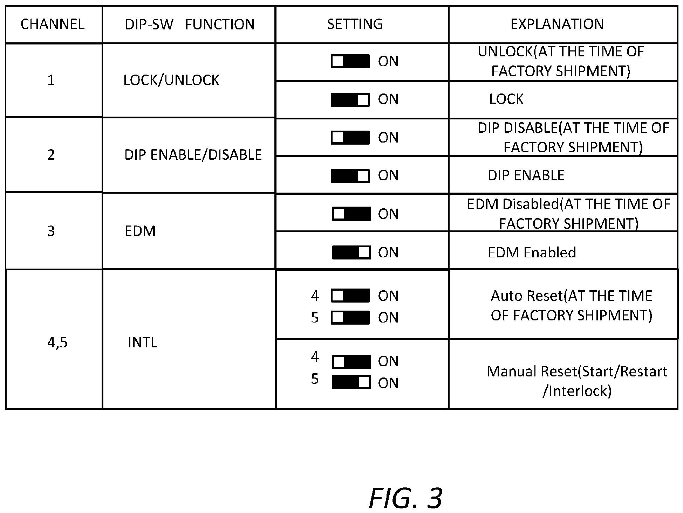

In the data processing device 3 according to the present embodiment, the DIP switch 31 is provided as a setting section for setting the above-mentioned operating conditions of the data processing device 3. Fig. 3 is a diagram showing a part of the functions of the DIP switch 31.

In the present embodiment, the DIP switch having eight channels is used. As shown in Fig. 3, a channel 1 is used for switching "LOCK" and "UNLOCK". At the time of shipment of the data processing device 3 from the factory, the channel 1 is set to "UNLOCK." If the channel is set to "UNLOCK", the data written in the data processing device 3 in in uncertain condition, so that it is possible to backup the setting data. If the channel 1 is set to "LOCK", the data written in the data processing device 3 is in determined condition, so that it is possible to restore the setting data. It can be said that the channel 1 is a switch for switching a backuping operation and a restoring operation.

As shown in Fig. 3, a channel 2 is used for switching "DIP ENABLE" and "DIP DISABLE." At the time of shipment of the data processing device 3 from the factory, the channel 2 is set to "DIP DISABLE." If the channel 2 is set to "DIP DISABLE", the setting by the DIP switch 31 is disabled, so that the setting written in the data processing device 3 by a personal computer is enabled. If the channel 2 is set to "DIP ENABLE", the setting by the DIP switch 31 is enabled, the information written by the personal computer is overwritten with the information set by the DIP switch 31. Therefore, it is possible to set the operation of the sensor S in the data processing device 3 alone.

As shown in Fig. 3, a channel 3 is used for switching the functions of EDM (External Device Monitoring) . At the time of shipment of the data processing device 3 from the factory, the channel 3 is set to "EDM Disabled", so that EDM is disabled. If EDM is enabled, the monitoring of a relay contact, etc., is performed by the sensor S.

As shown in Fig. 3, a channel 4 and a channel 5 are used for switching "Auto Reset" and "Manual Reset." At the time of shipment of the data processing device 3 from the factory, the channel 4 and the channel 5 are set to "Auto Reset." If they are set to "Auto Reset", an safety output is output when the sensor S confirms that the operations of receiving light are done in all optical axes. If they are set to "Manual Reset", the safety output is output after a user's operation even when the sensor S confirms that the operations of receiving light are done in all optical axes.

As described above, the data processing device 3 according to the present embodiment, it is possible to change the setting of the operations of the sensor 3 in the data processing device 3 alone by setting the DIP switch 31.

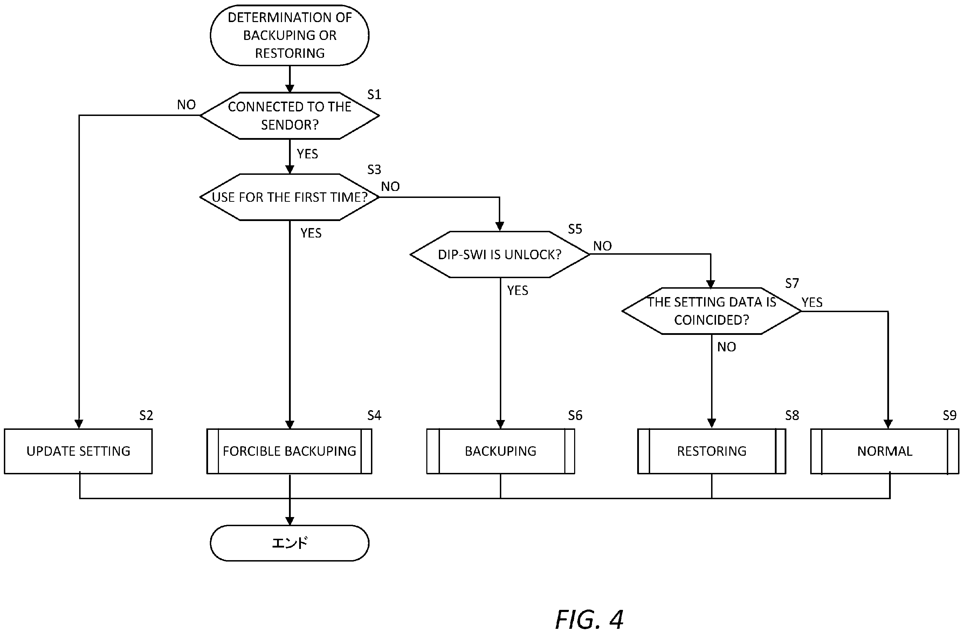

Referring to the flowchart indicated in Fig.4 to Fig.6, a backup process and a restore process by the data processing device 3 will be described below.

The processed indicated in Fig.4 to Fig.6 are implemented at that time of starting the data processing device 3.

First, as shown in Fig. 4, the control section 36 in the data processing device 3 determines whether or not the data processing device 3 is connected to the sensor S (S1). If the control section 36 determines that the data processing device 3 is not connected to the sensor 3 (S1:NO), the control section 36 receives setting data, etc. from a personal computer to perform updating the setting data of the memory 37, etc., since it is determined that the data processing device 3 is connected to the personal computer (S2) .

If the control section 36 determines that the data processing device 3 is connected to the sensor S (S1:YES), the control section 36 determines whether this data processing device 3 is in the state of factory shipment and used for the first time, or it already has a used history (S3). It is possible to determine whether it is used for the first time or not since any data for any sensor S is not stored in the memory 37.

If the control section 36 determines that this data processing device 3 is used for the first time (S3:YES), it performs backuping process forcibly (S4). If the control section 36 determines that this data processing device 3 is not used for the first time and has a use history (S3:NO), it determines whether or not the channel 1 of the DIP switch 31 is set to "UNLOCK" (S5). If the control section 36 determines that the channel 1 of the DIP switch 31 is set to "UNLOCK" (S5:YES), it performs the backuping process (S6).

However, if the control section 36 determines that the channel 1 of the DIP switch 31 is set to "LOCK" (S5:NO), it determines whether or not the setting data read out from the sensor S connected to the data processing device 3 coincides with the setting data stored in the data processing device 3 (S7). The setting data is one for the type of the sensor S, the number of optical axes, the distance of an axis, etc.

If the control section 36 determines that the data processing device 3 is connected to a new sensor 3 since the setting data does not coincide with that stored in the data processing device 3 (S7:NO), it performs a restoring process (S8). However, if the control section 36 determines that the data processing device 3 is connected to the same sensor 3 as that connected to so far since the setting data coincides with that stored in the data processing device 3 (S7:YES), it performs a normal process (a sensor detecting operation) without changing the setting data in the sensor S (S9).

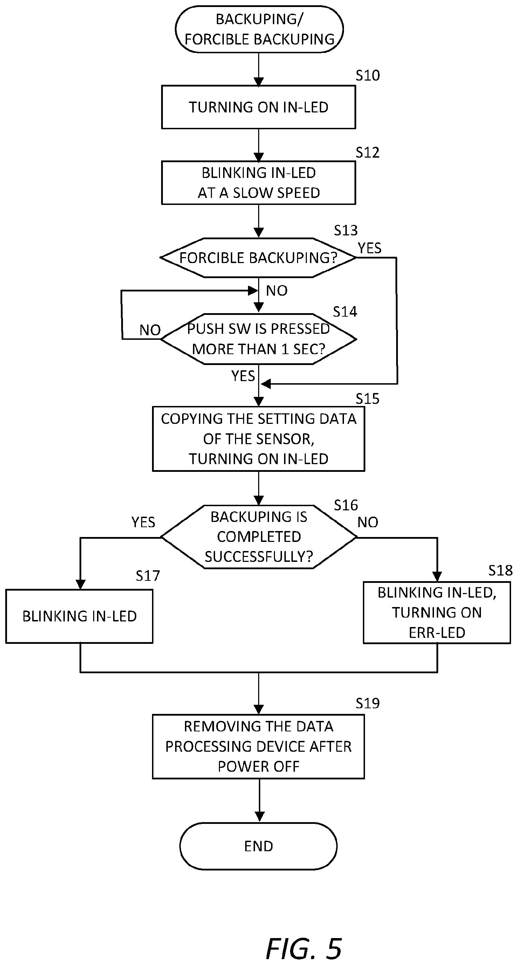

Fig. 5 shows the details of a forcible backuping process indicated in the step S4 of Fig.4 and a backuping process indicated in the step S6 of Fig.4.

As shown in Fig. 5, the control section 36 turns on the IN-LED 33A when the forcible backuping process or the backuping process is started (S10).

If the sensor S detects that the data processing device 3 is connected to the sensor S, the setting data in the data processing device 3 is in the state of capable of being backuped. Next, the control section 36 makes the IN-LED 33A blink at a slow speed (S12).

The control section 36 determines whether the buckuping process is a forcible one or a normal one (S13). As described above, if any data of any sensor S is not stored in the memory 37, the control section 36 can determine that it is a forcible backuping process. If the control section 36 determines that it is a forcible backuping process (S13:YES), it copies the setting data in the sensor S and the setting data in the data processing device 3 to the memory 37 (S15) to turn on the IN-LED 33A. If it is a forcible backuping process, the forcible backuping process is implemented just by connecting the data processing device 3 to the sensor S.

If the control section 36 determines that it is not a forcible backuping process (S13:NO), it determines whether or not the push switch 32 is pressed more than one second (S14). This is because it prevents user's undesired rewriting of data in the data processing device 3 from being implemented. Although this is not described in Fig. 5, if the control section 36 cannot confirm that the push switch 32 is pressed more than one second even after a predetermined period, it may suspend a process.

If the control section 36 determines that the push switch 32 is pressed more than one second (S14:YES), it copies the setting data in the sensor S to the memory 37 (S15) to turn on the IN-LED 33A (S15).

The control section 36 determines whether or not the buckuping process is completed successfully (S16). If the control section 36 determines that the buckuping process is completed successfully (S16:YES), it makes the IN-LED 33A blink (S17). If the control section 36 determines that the buckuping process is not completed successfully (S16:NO), it makes the IN-LED 33A blink and makes the ERR-LED 33C turn on (S18) .

After that, the power is turned off, the data processing device 3 is removed from the sensor S (S19).

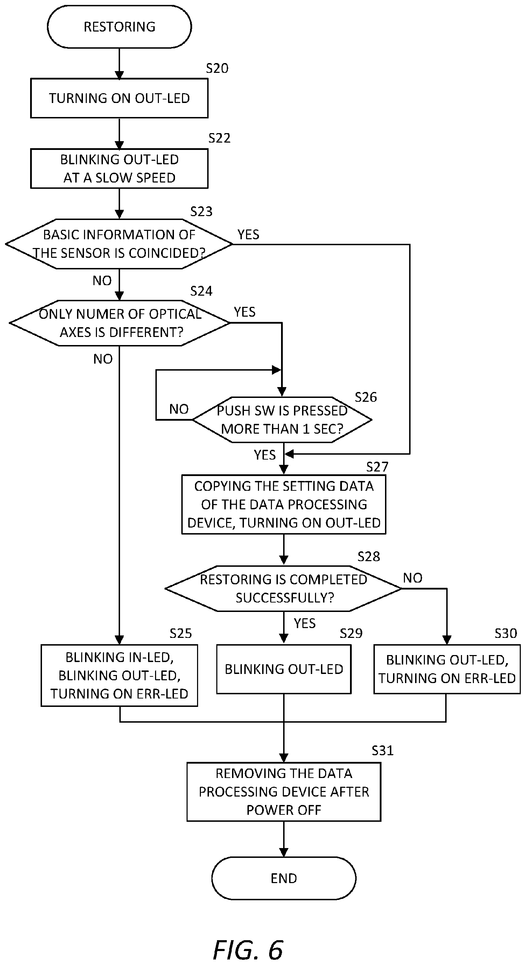

Fig. 6 shows the details of a restoring process indicated in the step S8 of Fig. 4.

As shown in Fig. 6, the control section 36 makes the OUT-LED 33B turn on when the restoring processing is started (S20).

If the sensor S detects that the data processing device 3 is connected to the sensor S, the setting data is in the state of capable of being restored to the data processing device 3. The control section 36 makes the OUT-LED 33B at a slow speed (S22).

The control section 36 determines whether the basic information of the connected sensor S coincides with the basic information stored in the data processing device 3 (S23). The basic information includes a CRC of setting data group and a connecting configuration of a sensor S. The setting data group includes a type of a sensor S, the number of optical axes, a distance between optical axes, etc.

If the control section 36 determines that the basic information of the connected sensor S coincides with the basic information stored in the data processing device 3 (S23:YES), it copies the setting data stored in the memory 37 in the data processing device 3 to the sensor S to make the OUT-LED 33A turn on (S26) . Thus, at the restoring process, when the basic information coincides with the basic information stored in the data processing device 3, the restoring process is automatically implemented just by connecting the data processing device 3 to the sensor S.

If the control section 36 determines that the basic information of the connected sensor S does not coincide with the basic information stored in the data processing device 3 (S23:NO), it determines whether or not only the number of optical axes of the sensor S is different from that in the basic information stored in the data processing device 3 (S24). This is because there is a case where the restoring process is implemented with respect to the sensor S, in which only the number of optical axes is different, according to the user's determination. If the control section 36 determines that only the number of the optical axes in the sensor S is different from that in the basic information stored in the data processing device 3 (S24:YES), it determines whether or not the push switch 32 is pressed more than one second (S26) . This is because it prevents user's undesired rewriting of data in the sensor S from being implemented. Although this is not described in Fig. 6, if the control section 36 cannot confirm that the push switch 32 is pressed more than one second even after a predetermined period, it may suspend a process.

If the control section 36 determined that the push switch 32 is pressed more than one second (S26:YES), it copies the setting data stored in the memory 37 of the data processing device 3 to the sensor S to make the OUT-LED 33B turn on (S37).

If the control section determines that not only the number of optical axes of the sensor S, but also other information is different from those in the basic information stored in the data processing device 3 (S24:NO), it makes the IN-LED 33A and the OUT-LED 33B blink, and makes the ERR-LED 33C turn on since it is inappropriate to implement the restoring process.

The control section 36 determines whether or not the restoring process is completed successfully after the copy of the setting data from the data processing device 3 to the sensor S indicated in the step S27 is completed (S28) . If the control section 36 determines that the restoring process is completed successfully (S28:YES), it makes the OUT-LED 33B blink (S29). If the control section 36 determines that the restoring process is not completed successfully (S28:NO), it makes the OUT-LED 33B blink, and makes the ERR-LED 33C turn on (S30).

After that, the power is turned off, the data processing device 3 is removed from the sensor S (S31). Although this is not described in Fig. 6, the data processing device 3 may be restarted without removing the data processing device 3 from the sensor S.

As described above, according to the present embodiment, a backuping process and a restoring process are implemented according to the determination by the data processing device 3 just by connecting the data processing device 3 to the sensor S. Therefore, it is possible for anyone to easily implement the backuping process and the restoring process without bringing a personal computer, etc., to a production site.

### (Second Embodiment)

In the above-described embodiment, the data processing device 3 is connected to one sensor S. However, the data processing device 3 may implement the above-described backuping process and restoring process with respect to a plurality of sensors S by securing memory areas for the plurality of sensors S in the memory 37 and distinguishing each of the plurality of sensors S.

Furthermore, by memorizing product information for every light projecting section 1 and every light receiving section 2 in the data processing device 3, the restoring process may be automatically implemented just when the sensor 3 is connected to the data processing device 3 if only the same type of light projecting section 1, or only the same type of light receiving section 2 is exchanged.

Moreover, the sensor S may be operated on the basis of data after the restoring process by automatically restarting the sensor S after the data processing device 3 implements the restoring process.

The embodiments are described as the exemplification of the present invention. Therefore, the present invention is not limited to those embodiments, but is defined by the claims. It should be noted and understood that there can be improvements and modifications made of the present invention described in detail above without departing from the scope of the invention as set forth in the accompanying claims.

### REFERENCE NUMBERS

- 1: LIGHT PROJECTING SECTION
- 2: LIGHT RECEIVING SECTION
- 3: DATA PROCESSING DEVIE
- 4: BRANCH CONNECTOR
- 5: EXTERNAL POWER SOURCE
- 6A: COMMUNICATION LINE
- 6B: COMMUNICATION LINE
- 7A: POWER SUPPLY LINE
- 7B: POWER SUPPLY LINE
- 11: LIGHT PROJECTING ELEMENT
- 12: DRIVING CIRCUIT
- 13: OPTICAL AXIS SEQUENTIAL SELECTING CIRCUIT
- 16: CONTROL CIRCUIT
- 17: COMMUNICATION CIRCUIT
- 18: POWER SUPPLY CIRCUIT
- 21: LIGHT RECEIVING ELEMENT
- 22: AMPLIFIER
- 23: ANALOG SWITCH
- 24: INPUTTING AMPLIFIER
- 25: OPTICAL AXIS SEQUENTIAL SELECTING CIRCUIT
- 26: CONTROL CIRCUIT
- 27: COMMUNICATION CIRCUIT
- 28: POWER SUPPLY CIRCUIT
- 31: DIP SWITCH
- 32: PUSH SWITCH
- 33: LED
- 33A: IN-LED
- 33B: OUT-LED
- 33C: ERR-LED
- 34: USB TERMINAL
- 35A: CONNECTING TERMINAL
- 35B: CONNECTING TERMINAL
- 36: CONTROL SECTION
- 37: MEMORY
- 38: COMMUNICATION SECTION
- 39: USB INTERFACE
- 40: POWER SUPPLY SECTION
- 41: DISPLAY SECTION
- 42: INPUT SECTION
- S: MULTIPLE OPTICAL AXIS PHOTOELECTRIC SENSOR

## Claims

1. A data processing device (3) that is capable of being connected to a multiple optical axis photoelectric sensor (S) for detecting a shielded state for each of a plurality of optical axes to output a signal indicating presence or absence of an object on the basis of a result of detecting the shielded state, and is capable of reading and writing data including setting data for setting definitions of detecting operations at the multiple optical axis photoelectric sensor (S), the data processing device (3) for the multiple optical axis photoelectric sensor (S) comprising:
a communication section (38) that is capable of communicating with the multiple optical axis photoelectric sensor (S);
a storing section (37) that is capable of storing the setting data and product information of the multiple optical axis photoelectric sensor (S);
a setting section (31) for setting operating conditions of the data processing device (3); and
a control section (36) for controlling an operation of the data processing device (3),
wherein when the control section (36) detects (S1) that the data processing device (3) is connected to the multiple optical axis photoelectric sensor (S):
the control section (36) reads (S6) the setting data from the multiple optical axis photoelectric sensor (S) through the communication section (38) to store the setting data read from the multiple optical axis photoelectric sensor (S) in the storing section (38), if the control section (36) determines that the data processing device (3) has a use history of the data processing device (3), and if the reading of the setting data is set to be enabled by the setting section (31), and **characterized in that**:
the control section (36) writes (S8) the setting data, which is stored in the storing section (37), in the multiple optical axis photoelectric sensor (S) through the communication section (38), if the control section (36) determines that the data processing device (3) has a use history of the data processing device (3), and if the reading of the setting data is set to be disabled by the setting section (31), and if product information of the multiple optical axis photoelectric sensor (S) does not coincide (S7) with that stored in the storing section (37), and
the control section (36) forcibly reads (S4) the setting data from the multiple optical axis photoelectric sensor (S) through the communication section (38) to store the setting data read from the multiple optical axis photoelectric sensor (S) in the storing section (37), if the control section (36) determines (S3) that the data processing device (3) does not have a use history of the data processing device (3).

2. The data processing device (3) for the multiple optical axis photoelectric sensor (S) according to claim 1,
wherein the data processing device (3) further comprises a confirming switch (32),
wherein the control section (36) performs the reading of the setting data after the control section (36) confirms that the confirming switch (32) is pressed by a user.

3. The data processing device (3) for the multiple optical axis photoelectric sensor (S) according to claim 1,
wherein the data processing device (3) further comprises a confirming switch (32),
wherein the control section (36) performs the writing of the setting data after the control section (36) confirms that the confirming switch (32) is pressed by a user.

4. The data processing device (3) for the multiple optical axis photoelectric sensor (S) according to any one of claims 1 to 3,
wherein the control section (36) makes the multiple optical axis photoelectric sensor (S) operate using the setting data after the writing of the setting data is performed, by restarting the multiple optical axis photoelectric sensor (S) after performing the writing of the setting data.

5. The data processing device (3) for the multiple optical axis photoelectric sensor (S) according to any one of claims 1 to 4,
wherein a plurality of multiple optical axis photoelectric sensors (S) are provided,
wherein the storing section (37) is capable of storing each product information for each of the plurality of multiple optical axis photoelectric sensors (S),
wherein the control section (36) performs the reading of the setting data from each of the plurality of multiple optical axis photoelectric sensors (S), or performs the writing of the setting data in each of the plurality of multiple optical axis photoelectric sensors (S).

6. The data processing device (3) for the multiple optical axis photoelectric sensor according (S) to any one of claims 1 to 5,
wherein the multiple optical axis photoelectric sensor (S) comprises a light projecting section (1) and a light receiving section (2),
wherein the storing section (37) is capable of storing each product information for each of the light projecting section (1) and the light receiving section (2),
wherein the control section (36) performs the reading of the setting data from each of the light projecting section (1) and the light receiving section (2), or performs the writing of the setting data in each of the light projecting section (1) and the light receiving section (2).

7. The data processing device (3) for the multiple optical axis photoelectric sensor (S) according to claim 6,
wherein the data processing device (3) is capable of being connected to a plurality of light projecting sections (1) and a plurality of light receiving sections (2),
wherein the storing section (37) is capable of storing each product information for each of the plurality of light projecting sections (1) and each of the plurality of light receiving sections (2),
wherein the control section (36) performs the reading of the setting data from each of the plurality of light projecting sections (1) and each of the plurality of light receiving sections (2), or performs the writing of the setting data in each of the plurality of light projecting sections (1) and each of the plurality of light receiving sections (2).

8. The data processing device (3) for the multiple optical axis photoelectric sensor (S) according to any one of claims 1 to 7,
wherein the data processing device (3) further comprises a generic communication section (43) that is capable of communicating with other devices,
wherein the control section (36) is capable of transmitting data stored in the storing section (37) to the other device through the generic communication section (43).

9. The data processing device (3) for the multiple optical axis photoelectric sensor (S) according to any one of claims 1 to 8,
wherein the data processing device (3) is capable of being driven only by a bus power in a personal computer.

## Patentansprüche

1. Datenverarbeitungsvorrichtung (3), die in der Lage ist, mit einem fotoelektrischen Sensor (S) mit mehreren optischen Achsen zum Erkennen eines abgeschirmten Zustands für jede einer Vielzahl optischer Achsen verbunden zu werden, um auf der Grundlage eines Ergebnisses des Erkennens des abgeschirmten Zustands ein Signal auszugeben, das ein Vorhandensein oder Nichtvorhandensein eines Objekts angibt, und in der Lage ist, Daten auszulesen und zu schreiben, die Einstelldaten zum Einstellen von Definitionen von Erkennungsoperationen an dem fotoelektrischen Sensor (S) mit mehreren optischen Achsen enthalten, wobei die Datenverarbeitungsvorrichtung (3) für den fotoelektrischen Sensor (S) mit mehreren optischen Achsen umfasst:
einen Kommunikationsabschnitt (38), der in der Lage ist, mit dem fotoelektrischen Sensor (S) mit mehreren optischen Achsen zu kommunizieren;
einen Speicherabschnitt (37), der in der Lage ist, die Einstelldaten und Produktinformationen des fotoelektrischen Sensors (S) mit mehreren optischen Achsen zu speichern;
einen Einstellabschnitt (31) zum Einstellen von Betriebsbedingungen der Datenverarbeitungsvorrichtung (3); und
einen Steuerabschnitt (36) zum Steuern eines Betriebs der Datenverarbeitungsvorrichtung (3),
wobei, wenn der Steuerabschnitt (36) erkennt (S1), dass die Datenverarbeitungsvorrichtung (3) mit dem fotoelektrischen Sensor (S) mit mehreren optischen Achsen verbunden ist:
der Steuerabschnitt (36) die Einstelldaten aus dem fotoelektrischen Sensor (S) mit mehreren optischen Achsen über den Kommunikationsabschnitt (38) ausliest (S6), um die aus dem fotoelektrischen Sensor (S) mit mehreren optischen Achsen ausgelesenen Einstelldaten in dem Speicherabschnitt (38) zu speichern, wenn der Steuerabschnitt (36) bestimmt, dass die Datenverarbeitungsvorrichtung (3) eine Nutzungshistorie der Datenverarbeitungsvorrichtung (3) aufweist, und wenn das Auslesen der Einstelldaten durch den Einstellabschnitt (31) aktiviert ist, und **dadurch gekennzeichnet, dass**:
der Steuerabschnitt (36) die Einstelldaten, die in dem Speicherabschnitt (37) gespeichert sind, in den fotoelektrischen Sensor (S) mit mehreren optischen Achsen über den Kommunikationsabschnitt (38) schreibt (S8), wenn der Steuerabschnitt (36) bestimmt, dass die Datenverarbeitungsvorrichtung (3) eine Nutzungshistorie der Datenverarbeitungsvorrichtung (3) aufweist, und wenn das Auslesen der Einstelldaten durch den Einstellabschnitt (31) deaktiviert ist und wenn Produktinformationen des fotoelektrischen Sensors (S) mit mehreren optischen Achsen nicht mit den im Speicherabschnitt (37) gespeicherten übereinstimmen (S7), und
der Steuerabschnitt (36) zwangsweise die Einstelldaten aus dem fotoelektrischen Sensor (S) mit mehreren optischen Achsen durch den Kommunikationsabschnitt (38) ausliest (S4), um die von dem fotoelektrischen Sensor (S) mit mehreren optischen Achsen ausgelesenen Einstelldaten im Speicherabschnitt (37) zu speichern, wenn der Steuerabschnitt (36) bestimmt (S3), dass die Datenverarbeitungsvorrichtung (3) keine Nutzungshistorie der Datenverarbeitungsvorrichtung (3) aufweist.

2. Datenverarbeitungsvorrichtung (3) für den fotoelektrischen Sensor (S) mit mehreren optischen Achsen nach Anspruch 1, wobei die Datenverarbeitungsvorrichtung (3) ferner einen Bestätigungsschalter (32) umfasst,
wobei der Steuerabschnitt (36) das Auslesen der Einstelldaten durchführt, nachdem der Steuerabschnitt (36) bestätigt, dass der Bestätigungsschalter (32) von einem Benutzer gedrückt wird.

3. Datenverarbeitungsvorrichtung (3) für den fotoelektrischen Sensor (S) mit mehreren optischen Achsen nach Anspruch 1,
wobei die Datenverarbeitungsvorrichtung (3) ferner einen Bestätigungsschalter (32) umfasst,
wobei der Steuerabschnitt (36) das Schreiben der Einstelldaten durchführt, nachdem der Steuerabschnitt (36) bestätigt, dass der Bestätigungsschalter (32) von einem Benutzer gedrückt wird.

4. Datenverarbeitungsvorrichtung (3) für den fotoelektrischen Sensor (S) mit mehreren optischen Achsen nach einem der Ansprüche 1 bis 3,
wobei der Steuerabschnitt (36) den fotoelektrischen Sensor (S) mit mehreren optischen Achsen veranlasst, unter Verwendung der Einstelldaten zu arbeiten, nachdem das Schreiben der Einstelldaten durchgeführt wurde, indem der fotoelektrische Sensor (S) mit mehreren optischen Achsen nach dem Ausführen des Schreibens der Einstelldaten neu gestartet wird.

5. Datenverarbeitungsvorrichtung (3) für den fotoelektrischen Sensor (S) mit mehreren optischen Achsen nach einem der Ansprüche 1 bis 4,
wobei eine Vielzahl fotoelektrischer Sensoren (S) mit mehreren optischen Achsen bereitgestellt sind,
wobei der Speicherabschnitt (37) in der Lage ist, alle Produktinformationen für jeden der Vielzahl von fotoelektrischen Sensoren (S) mit mehreren optischen Achsen zu speichern,
wobei der Steuerabschnitt (36) das Auslesen der Einstelldaten aus jedem der Vielzahl fotoelektrischer Sensoren (S) mit mehreren optischen Achsen durchführt oder das Schreiben der Einstelldaten in jeden der Vielzahl fotoelektrischer Sensoren (S) mit mehreren optischen Achsen durchführt.

6. Datenverarbeitungsvorrichtung (3) für den fotoelektrischen Sensor mit mehreren optischen Achsen nach (S) einem der Ansprüche 1 bis 5,
wobei der fotoelektrische Sensor (S) mit mehreren optischen Achsen einen Lichtprojektionsabschnitt (1) und einen Lichtempfangsabschnitt (2) umfasst,
wobei der Speicherabschnitt (37) in der Lage ist, alle Produktinformationen für jeden von dem Lichtprojektionsabschnitt (1) und dem Lichtempfangsabschnitt (2) zu speichern,
wobei der Steuerabschnitt (36) das Auslesen der Einstelldaten von jedem von dem Lichtprojektionsabschnitt (1) und dem Lichtempfangsabschnitt (2) durchführt oder das Schreiben der Einstelldaten in jeden von dem Lichtprojektionsabschnitt (1) und dem Lichtempfangsabschnitt (2) durchführt.

7. Datenverarbeitungsvorrichtung (3) für den fotoelektrischen Sensor (S) mit mehreren optischen Achsen nach Anspruch 6,
wobei die Datenverarbeitungsvorrichtung (3) in der Lage ist, mit einer Vielzahl von Lichtprojektionsabschnitten (1) und einer Vielzahl von Lichtempfangsabschnitten (2) verbunden zu werden,
wobei der Speicherabschnitt (37) in der Lage ist, alle Produktinformationen für jeden von der Vielzahl von Lichtprojektionsabschnitten (1) und jeden von der Vielzahl von Lichtempfangsabschnitten (2) zu speichern,
wobei der Steuerabschnitt (36) das Auslesen der Einstelldaten von jedem von der Vielzahl von Lichtprojektionsabschnitten (1) und jedem von der Vielzahl von Lichtempfangsabschnitten (2) durchführt oder das Schreiben der Einstelldaten in jeden von der Vielzahl von Lichtprojektionsabschnitten (1) und jeden von der Vielzahl von Lichtempfangsabschnitten (2) durchführt.

8. Datenverarbeitungsvorrichtung (3) für den fotoelektrischen Sensor (S) mit mehreren optischen Achsen nach einem der Ansprüche 1 bis 7,
wobei die Datenverarbeitungsvorrichtung (3) ferner einen generischen Kommunikationsabschnitt (43) umfasst, der in der Lage ist, mit anderen Vorrichtungen zu kommunizieren,
wobei der Steuerabschnitt (36) in der Lage ist, in dem Speicherabschnitt (37) gespeicherte Daten durch den generischen Kommunikationsabschnitt (43) an die andere Vorrichtung zu übertragen.

9. Datenverarbeitungsvorrichtung (3) für den fotoelektrischen Sensor (S) mit mehreren optischen Achsen nach einem der Ansprüche 1 bis 8,
wobei die Datenverarbeitungsvorrichtung (3) in der Lage ist, nur durch eine Busleistung in einem Personalcomputer betrieben zu werden.

## Revendications

1. Dispositif de traitement de données (3) qui peut être connecté à un capteur photoélectrique à axes optiques multiples (S) pour détecter un état blindé pour chacun d'une pluralité d'axes optiques afin de délivrer un signal indiquant la présence ou l'absence d'un objet sur la base d'un résultat de détection de l'état blindé, et peut lire et écrire des données comprenant des données de réglage pour régler des définitions d'opérations de détection au niveau du capteur photoélectrique à axes optiques multiples (S), le dispositif de traitement de données (3) pour le capteur photoélectrique à axes optiques multiples (S) comprenant :
une section de communication (38) qui peut communiquer avec le capteur photoélectrique à axes optiques multiples (S) ;
une section de stockage (37) qui peut stocker les données de réglage et les informations produit du capteur photoélectrique à axes optiques multiples (S) ;
une section de réglage (31) pour régler les conditions de fonctionnement du dispositif de traitement de données (3) ; et
une section de commande (36) pour commander une opération du dispositif de traitement de données (3),
dans lequel lorsque la section de commande (36) détecte (S1) que le dispositif de traitement de données (3) est connecté au capteur photoélectrique à axes optiques multiples (S) :
la section de commande (36) lit (S6) les données de réglage à partir du capteur photoélectrique à axes optiques multiples (S) par l'intermédiaire de la section de communication (38) pour stocker les données de réglage lues à partir du capteur photoélectrique à axes optiques multiples (S) dans la section de stockage (38), si la section de commande (36) détermine que le dispositif de traitement de données (3) a un historique d'utilisation du dispositif de traitement de données (3),
et si la lecture des données de réglage est réglée pour être activée par la section de réglage (31), et **caractérisé en ce que** :
la section de commande (36) écrit (S8) les données de réglage, qui sont stockées dans la section de stockage (37), dans le capteur photoélectrique à axes optiques multiples (S) par l'intermédiaire de la section de communication (38), si la section de commande (36) détermine que le dispositif de traitement de données (3) a un historique d'utilisation du dispositif de traitement de données (3), et si la lecture des données de réglage est réglée pour être désactivée par la section de réglage (31), et si les informations produit du capteur photoélectrique à axes optiques multiples (S) ne coïncident pas (S7) avec celles stockées dans la section de stockage (37), et
la section de commande (36) lit de manière forcée (S4) les données de réglage à partir du capteur photoélectrique à axes optiques multiples (S) par l'intermédiaire de la section de communication (38) pour stocker les données de réglage lues à partir du capteur photoélectrique à axes optiques multiples (S) dans la section de stockage (37), si la section de commande (36) détermine (S3) que le dispositif de traitement de données (3) n'a pas d'historique d'utilisation du dispositif de traitement de données (3).

2. Dispositif de traitement de données (3) pour le capteur photoélectrique à axes optiques multiples (S) selon la revendication 1,
dans lequel le dispositif de traitement de données (3) comprend en outre un commutateur de confirmation (32),
dans lequel la section de commande (36) effectue la lecture des données de réglage après la confirmation par la section de commande (36) que le commutateur de confirmation (32) a été pressé par un utilisateur.

3. Dispositif de traitement de données (3) pour le capteur photoélectrique à axes optiques multiples (S) selon la revendication 1,
dans lequel le dispositif de traitement de données (3) comprend en outre un commutateur de confirmation (32),
dans lequel la section de commande (36) exécute l'écriture des données de réglage après la confirmation par la section de commande (36) que le commutateur de confirmation (32) a été pressé par un utilisateur.

4. Dispositif de traitement de données (3) pour le capteur photoélectrique à axes optiques multiples (S) selon l'une quelconque des revendications 1 à 3,
dans lequel la section de commande (36) fait fonctionner le capteur photoélectrique à axes optiques multiples (S) en utilisant les données de réglage après l'exécution de l'écriture des données de réglage, en redémarrant le capteur photoélectrique à axes optiques multiples (S) après l'exécution de l'écriture des données de réglage.

5. Dispositif de traitement de données (3) pour le capteur photoélectrique à axes optiques multiples (S) selon l'une quelconque des revendications 1 à 4,
dans lequel une pluralité de capteurs photoélectriques à axes optiques multiples (S) sont prévus, dans lequel la section de stockage (37) peut stocker chaque information produit pour chacun de la pluralité de capteurs photoélectriques à axes optiques multiples (S),
dans lequel la section de commande (36) effectue la lecture des données de réglage à partir de chacun de la pluralité de capteurs photoélectriques à axes optiques multiples (S), ou effectue l'écriture des données de réglage dans chacun de la pluralité de capteurs photoélectriques à axes optiques multiples (S).

6. Dispositif de traitement de données (3) pour le capteur photoélectrique à axes optiques multiples selon (S) l'une quelconque des revendications 1 à 5,
dans lequel le capteur photoélectrique à axes optiques multiples (S) comprend une section de projection de lumière (1) et une section de réception de lumière (2),
dans lequel la section de stockage (37) peut stocker chaque information produit pour chacune de la section de projection de lumière (1) et de la section de réception de lumière (2),
dans lequel la section de commande (36) effectue la lecture des données de réglage à partir de chacune de la section de projection de lumière (1) et de la section de réception de lumière (2), ou effectue l'écriture des données de réglage dans chacune de la section de projection de lumière (1) et la section de réception de lumière (2).

7. Dispositif de traitement de données (3) pour le capteur photoélectrique à axes optiques multiples (S) selon la revendication 6,
dans lequel le dispositif de traitement de données (3) peut être connecté à une pluralité de sections de projection de lumière (1) et à une pluralité de sections de réception de lumière (2),
dans lequel la section de stockage (37) peut stocker chaque information produit pour chacune de la pluralité de sections de projection de lumière (1) et chacune de la pluralité de sections de réception de lumière (2),
dans lequel la section de commande (36) effectue la lecture des données de réglage à partir de chacune de la pluralité de sections de projection de lumière (1) et de chacune de la pluralité de sections de réception de lumière (2), ou effectue l'écriture des données de réglage dans chacune de la pluralité de sections de projection de lumière (1) et chacune de la pluralité de sections de réception de lumière (2).

8. Dispositif de traitement de données (3) pour le capteur photoélectrique à axes optiques multiples (S) selon l'une quelconque des revendications 1 à 7,
dans lequel le dispositif de traitement de données (3) comprend en outre une section de communication générique (43) qui peut communiquer avec d'autres dispositifs,
dans lequel la section de commande (36) peut transmettre des données stockées dans la section de stockage (37) à l'autre dispositif par l'intermédiaire de la section de communication générique (43).

9. Dispositif de traitement de données (3) pour le capteur photoélectrique à axes optiques multiples (S) selon l'une quelconque des revendications 1 à 8,
dans lequel le dispositif de traitement de données (3) peut être piloté uniquement par une alimentation par bus dans un ordinateur personnel.
